# EUROPÄISCHE PATENTANMELDUNG

(11) **EP 3 608 454 A1**
(43) Veröffentlichungstag der Anmeldung: **12.02.2020**
(21) Anmeldenummer: 19000383.0
(22) Anmeldetag: 14.03.2015
(51) Int. Cl.: D01F 1/10, D21F 1/00, D01F 6/66, D01F 6/76

(54) **MONOFILAMENTE MIT HOHER ABRIEB- UND FORMBESTÄNDIGKEIT, GERINGER GLEITREIBUNG UND ANSCHMUTZNEIGUNG, TEXTILE FLÄCHENGEBILDE ENTHALTEND DIESE UND DEREN VERWENDUNG**

(30) Priorität: 16.04.2014 DE 202014003285 U; 25.09.2014 DE 102014014479
(62) Teilanmeldung aus: 15000762.3
(71) Anmelder: Perlon Nextrusion Monofil GmbH, 86399 Bobingen (DE)
(72) Erfinder: Brüning, Hans-Joachim, 86179 Augsburg (DE); Büdenbender, Jürgen, 41539 Dormagen (DE); Heckenbenner, Pascal, 86199 Augsburg (DE)
(74) Vertreter: Ackermann, Joachim

(57) **Zusammenfassung**

Beschrieben werden Monofilamente enthaltend in einer Matrix aus thermoplastischem Polymer ausgewählt aus der Gruppe der Polyetherketone, Polyphenylensulfide oder einer Kombination von zweien oder mehreren davon und darin verteilt Teilchen aus Polysiloxan, die einen Durchmesser von 10 nm bis 200 µm aufweisen.

Die Monofilamente lassen sich insbesondere zur Herstellung von Papiermaschinenbespannungen einsetzen und zeichnen sich durch hohe Abrieb- und Formbeständigkeit, geringe Gleitreibung und Anschmutzneigung aus.

## Beschreibung

Die vorliegende Erfindung betrifft Monofilamente, die sich zur Herstellung von textilen Flächengebilden einsetzen lassen, die insbesondere in Umgebungen mit hoher mechanischer Belastung zum Einsatz gelangen.

Die aus den erfindungsgemäßen Monofilamenten hergestellten textilen Flächengebilde lassen sich vorzugsweise als Rundsieb für poröse Papiermaschinenbespannungen einsetzen. Diese kommen besonders bevorzugt in der Blattbildungs- und Trockenpartie von Papiermaschinen zum Einsatz.

Die Unterschicht von in der Blattbildungspartie von Papiermaschinen eingesetzten Formingsieben ist wegen der in dieser Partie herrschenden Druckverhältnisse (Saugboxen) erhöhtem Verschleiß ausgesetzt. Deshalb werden auf der Unterseite dieser Siebe bislang wechselweise Monofilamente aus Polyethylenterephthalat (nachstehend auch "PET" genannt) und aus Polyamid eingesetzt. Diese Kombination hat sich im Vergleich mit reinem PET als abriebbeständiger erwiesen.

Es wurde nun gefunden, dass sich der Zusatz von Silikonkügelchen zum Grundpolymer hervorragend dazu eignet, sowohl in der Kette als auch im Schuss von PMC Formier- und Trockensieben die Reibung sowie die Schmutzabweisung dieser Siebe nennenswert zu verringern. Dadurch kann insbesondere in der Trockenpartie der bisherige Zusatz von vergleichsweise teuren Fluorpolymeren zum Grundpolymer vermieden werden. Überraschenderweise wird durch den Zusatz von Silikonpolymer die Hydrolysebeständigkeit des Grundpolymers nicht negativ beeinflusst.

In DE 69609709T2 wird in einer Aufzählung von möglichen Zusätzen erwähnt, dass man in Monofilamenten Polysiloxane einsetzen kann. Auch der Zusatz von Polysiloxanen zu Monofilamenten für Papiermaschinensiebe ist in DE 10 2004 054 804 A1 und DE 10 2005 044 435 A1 bereits genannt.

Aufgabe dieser Erfindung ist die Bereitstellung einer Materialkombination, die einerseits einen sehr geringen Gleitwiderstand und damit eine geringe Antriebsleistung der Maschine ermöglicht, und andererseits eine geringe Anschmutzneigung aufweist.

Gelöst wird diese Aufgabe durch die Bereitstellung von Monofilamenten, die aus einer Mischung ausgewählter Komponenten hergestellt worden sind.

Die vorliegende Erfindung betrifft Monofilamente enthaltend eine Matrix aus thermoplastischem Polymer ausgewählt aus der Gruppe der Polyetherketone, Polyphenylensulfide oder einer Kombination von zweien oder mehreren davon und darin verteilt Teilchen aus Polysiloxan, die einen Durchmesser von 10 nm bis 200 µm aufweisen.

Die Polysiloxanteilchen können beliebige Gestalt aufweisen. Beispiele dafür sind Teilen mit rotationssymmetrischer Gestalt, insbesondere Sphären, aber auch mit irregulärer Gestalt. Diese Teilchen liegen als Mikropulver vor. Der Durchmesser dieser Teilchen bewegt sich im Bereich von 10 nm bis 200 µm, vorzugsweise von 0,2 bis 50 µm vor. Die Durchmesserangabe bezieht sich bei Teilchen mit variierenden Durchmessern auf den größten Durchmesser des Teilchens.

Bevorzugt werden Monofilamente enthalten sphärische Teilchen aus Polysiloxan, deren Durchmesser von 0,2 bis 50 µm beträgt.

Das Polysiloxan liegt als Mikropulver in dem Matrixpolymeren dispergiert vor. Es wird im Allgemeinen zu 0,001 Gew. % bis 8 Gew %, bevorzugt 0,02 Gew. % bis 5 Gew. % dem Matrixpolymer zudosiert. Die Teilchen liegen im Matrixpolymer als heterogene Phase vor. Die Teilchen können als einzelne Teilchen im Matrixpolymer vorliegen und/oder als Aggregate verschiedener Einzelteilchen.

Die Menge der Teilchen im Monofilament kann in weiten Bereichen variieren. Typischerweise beträgt die Menge der Teilchen im Monofilament 0,01 bis 8 Gew. %, bevorzugt 0,1 bis 5 Gew. %, bezogen auf die Masse des Monofilaments.

Bei den erfindungsgemäß verwendeten Polysiloxanen handelt es sich um eine Gruppe synthetischer Polymerer, bei denen Siliziumatome über Sauerstoffatome verknüpft sind. Die erfindungsgemäß eingesetzten Polysiloxane werden auch Silikone genannt. Dabei kann es sich um lineare oder miteinander vernetzte lineare Polysiloxane handeln oder auch um Polysiloxane mit Käfigstruktur, sogenannte Silsesquioxane.

Bevorzugt werden lineare oder vernetzte Polysiloxane enthaltend das wiederkehrende Strukturelement -SiR¹R²-O- eingesetzt oder Silsesquioxane der Formel R¹SiO_{3/2}, worin R¹ C₁-C₆-Alkyl, insbesondere Methyl ist, und R² C₁-C₆-Alkyl oder Phenyl, insbesondere Methyl oder Phenyl, bedeutet.

Ganz besonders bevorzugt sind Monofilamente, welche Polysiloxane enthalten, die lineare oder vernetzte Polydimethylsiloxane sind oder ein Polymethylsilsesquioxan.

Als thermoplastisches Matrixpolymer können thermoplastische Polymere aus der Gruppe der Polyetherketone, der Polyphenylensulfide oder einer Kombination von zweien oder mehreren davon ausgewählt werden.

Bevorzugte erfindungsgemäße Monofilamente sind durch Carbodiimid stabilisiert. Dieses wird der verspinnbaren Masse zugesetzt.

Ganz besonders bevorzugt werden polymere Carbodiimide als Stabilisatoren eingesetzt.

Carbodiimide werden unter dem Handelsnamen Stabaxol® (Rheinchemie) vermarktet.

Die Mengen der einzelnen Bestandteile in den erfindungsgemäßen Monofilamenten können in weiten Bereichen schwanken und werden vom Fachmann nach dem gewünschten Eigenschaftsprofil ausgewählt.

Bevorzugt werden Monofilamente, bei denen der Anteil an thermoplastischem Polymer 60 bis 95 Gew. % beträgt, der Anteil an Polysiloxan 0,02 bis 8 Gew. % und der Anteil an Carbodiimid 0 bis 10 Gew. %, wobei die Mengenangaben auf die Gesamtmenge des Monofilaments bezogen sind.

Die erfindungsgemäß eingesetzte Kombination von thermoplastischem Matrixpolymer und Polysiloxanteilchen verleiht den Monofilamenten neben einer geringen Gleitreibung und Anschmutzneigung gute textiltechnologische Eigenschaften, insbesondere eine hohe Formbeständigkeit und kombiniert mit Carbodiimiden auch eine ausgezeichnete Hydrolysebeständigkeit. Auf die in der Trockenpartie häufig eingesetzten Fluorpolymere zur Verringerung der Anschmutzneigung kann hier verzichtet werden, obgleich deren Einsatz nicht ausgeschlossen ist.

Die Auswahl der im Einzelfall eingesetzten Komponenten erfolgt durch den Fachmann. So sind die Komponenten für das erfindungsgemäße Monofilament so zu wählen, dass deren Verarbeitung bei Temperaturen erfolgen kann, bei denen keine der Komponenten einer nennenswerten Zersetzung unterliegt.

Das erfindungsgemäße Monofilament kann neben den oben beschriebenen Komponenten zusätzlich weitere und übliche Zusätze ent-halten. Die Menge an solchen Zusätzen beträgt typischerweise 0,001 bis 10 Gew. %, bezogen auf die Gesamtmasse des Monofilaments.

Beispiele für übliche Zusätze sind Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsvermindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren davon.

Die zur Herstellung der erfindungsgemäßen Monofilamente benötigten Komponenten sind an sich bekannt, teilweise kommerziell erhältlich oder können nach an sich bekannten Verfahren hergestellt werden.

Der Titer der erfindungsgemäßen Monofilamente kann in weiten Bereichen schwanken. Beispiele dafür sind 50 bis 45.000 dtex, insbesondere 100 bis 5.000 dtex.

Die Querschnittsform der erfindungsgemäßen Monofilamente kann beliebig sein, beispielsweise rund, oval oder n-eckig, wobei n größer gleich 3 ist.

Die erfindungsgemäßen Monofilamente können nach an sich bekannten Verfahren hergestellt werden.

Ein typisches Herstellverfahren umfasst die Maßnahmen:
i) Vermischen von Matrixpolymer und Polysiloxanteilchen oder von Matrixpolymer und einem Masterbatch enthaltend Polysiloxanteilchen in einem Extruder,
ii) Extrudieren des Gemisches aus Schritt i) durch eine Spinndüse,
iii) Abziehen des gebildeten Monofilaments,
iv) gegebenenfalls Verstrecken und/oder Relaxieren des Monofilaments, und
v) Aufspulen des Monofilaments.

Eine oder mehrere der Komponenten des erfindungsgemäßen Monofilaments können auch in Form eines Masterbatches eingesetzt werden. So lässt sich insbesondere das Carbodiimid als Masterbatch in Polyester gut dosieren und in das Matrixpolymere einmischen. Auch die Polysiloxanteilchen können in der Form eines Masterbatches in das Matrixpolymer eingearbeitet werden.

Die erfindungsgemäßen Monofilamente werden bei der Herstellung ein- oder mehrfach verstreckt.

Nach dem Aufschmelzen und Verpressen der Polymerschmelze durch eine Spinndüse wird der heiße Polymerfaden abgekühlt, vorzugsweise in einem Wasserbad, und anschließend ein- oder mehrfach verstreckt, gegebenenfalls fixiert und aufgespult, wie es aus dem Stand der Technik für die genannten schmelzspinnbaren Polymeren bekannt ist.

Bevorzugt werden die erfindungsgemäßen Monofilamente zur Herstellung von textilen Flächenkonstruktionen, insbesondere von Geweben, Spiralgeweben, Gelegen oder Gestricken, eingesetzt. Diese textilen Flächenkonstruktionen werden vorzugsweise in Sieben eingesetzt.

Die Erfindung betrifft daher auch ein textiles Flächengebilde enthaltend die oben beschriebenen Monofilamente, insbesondere textile Flächengebilde in Form eines Gewebes, Gestricks, Gewirkes, Geflechts oder Geleges.

Die erfindungsgemäßen Monofilamente lassen sich auf allen industriellen Gebieten einsetzen. Bevorzugt kommen sie bei Anwendungen zum Einsatz, in denen mit einem erhöhten Verschleiß sowie mit hoher mechanischer Belastung insbesondere in feucht-heißen Umgebungen zu rechnen ist. Beispiele dafür sind der Einsatz in Siebgeweben und Filtertüchern für Gas- und Flüssigkeitsfilter, in Trockenbändern, beispielsweise zur Herstellung von Lebensmitteln oder insbesondere von Papier.

Die Erfindung betrifft auch die Verwendung der oben beschriebenen Monofilamente als Papiermaschinenbespannung, in Förderbändern und in Filtrationssieben.

Ganz besonders bevorzugt werden die erfindungsgemäßen Monofilamente als Papiermaschinenbespannung in der Blattbildungspartie und/oder in der Trockenpartie der Papiermaschine eingesetzt.

Eingesetzt werden diese Monofilamente beispielsweise im Unterschuss von Formiersieben in Papiermaschinen. Dies kann zu 100 % als Unterschuss oder als sogenannter Wechselschuss (abwechselnd das genannte Monofilament im Wechsel mit z.B. Polyamid-Monofilamenten) erfolgen. Durch den Polysiloxan-Zusatz, insbesondere bei Zusatz von Polymethylsilsequioxan (PMSQ) wird die Gleitreibung deutlich herabgesetzt und damit die Antriebsleistung der Papiermaschine signifikant verringert, was eine bedeutende Energieersparnis zur Folge hat. Weiter ist das erfindungsgemäße Monofilament abriebbeständiger als vergleichbare Monofilamente aus Polyethylenterephthalat oder Polyamiden ohne Polysiloxan-Zusatz.

In einer weiteren bevorzugten Ausführungsform wird einer Dispersion aus Matrixpolymer und Polysiloxan, insbesondere PMSQ, noch Carbodiimid als Hydrolysestabilisator zugesetzt. Dadurch ist diese Variante besonders für Trocknungsprozesse in feuchter Umgebung geeignet, z.B. in der Trockenpartie von Papiermaschinen sowie in anderen kontinuierlich laufenden industriellen Trocknungs-und Filtrationspozessen.

Durch das Polysiloxan bzw. PMSQ wird die Restfestigkeit vergleichbarer hydrolyse-stabilisierter Polyethylenterephthalat-Typen nicht herabgesetzt. Ein weiterer positiver Nebeneffekt ist die geringe Anschmutzung des Monofilaments bzw. des Gewebes wegen der Hydrophobie des Polysiloxans bzw. PMSQ.

## Patentansprüche

1. Monofilamente enthaltend eine Matrix aus thermoplastischem Polymer ausgewählt aus der Gruppe der Polyetherketone, Polyphenylensulfide oder einer Kombination von zweien oder mehreren davon und darin verteilt Teilchen aus Polysiloxan, die einen Durchmesser von 10 nm bis 200 µm aufweisen.

2. Monofilamente nach Anspruch 1, **dadurch gekennzeichnet, dass** die Teilchen aus Polysiloxan sphärisch sind und einen Durchmesser von 0,2 bis 50 µm aufweisen.

3. Monofilamente nach einem der Ansprüche 1 oder 2, **dadurch gekennzeichnet, dass** die Menge der Teilchen im Monofilament 0,01 bis 8 Gew. % beträgt.

4. Monofilamente nach einem der Ansprüche 1 bis 3, **dadurch gekennzeichnet, dass** das Polysiloxan ein lineares oder vernetztes Polysiloxan enthaltend das wiederkehrende Strukturelement -SiR¹R²-O- ist oder ein Silsesquioxan der Formel R¹SiO_{3/2}, worin R¹ C₁-C₆-Alkyl, insbesondere Methyl ist, und R² C₁-C₆-Alkyl oder Phenyl, insbesondere Methyl oder Phenyl, bedeutet.

5. Monofilamente nach Anspruch 4, **dadurch gekennzeichnet, dass** das Polysiloxan ein lineares oder vernetztes Polydimethylsiloxan oder ein Polymethylsilsesquioxan ist.

6. Monofilamente nach einem der Ansprüche 1 bis 5, **dadurch gekennzeichnet, dass** dieses zusätzlich einen Carbodiimid-Stabilisator, vorzugsweise einen polymeren Carbodiimid-Stabilisator, enthält.

7. Monofilamente nach einem der Ansprüche 1 bis 6, **dadurch gekennzeichnet, dass** der Anteil an thermoplastischem Polymer 60 bis 95 Gew. % beträgt, der Anteil an Polysiloxan 0,02 bis 8 Gew. % und der Anteil an Carbodiimid 0 bis 10 Gew. %, wobei die Mengenangaben auf die Gesamtmenge des Monofilaments bezogen sind.

8. Monofilament nach mindestens einem der Ansprüche 1 bis 7, **dadurch gekennzeichnet, dass** das Monofilament zusätzlich 0,001 bis 10 Gew. % an üblichen Zusätzen enthält, insbesondere Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsvermindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren dieser Zusätze.

9. Textiles Flächengebilde enthaltend Monofilamente nach mindestens einem der Ansprüche 1 bis 8, insbesondere in Form eines Gewebes, Gestricks, Gewirkes, Geflechts oder Geleges.

10. Verwendung der Monofilamente nach mindestens einem der Ansprüche 1 bis 8 als Papiermaschinenbespannung, in Förderbändern und in Filtrationssieben .

11. Verwendung nach Anspruch 10, **dadurch gekennzeichnet, dass** die Papiermaschinenbespannung in der Blattbildungspartie und/oder in der Trockenpartie der Papiermaschine eingesetzt wird.
